(19) Europäisches Patentamt
European Patent Office
Office européen des brevets

(11) EP 2 023 634 A1

(12) EUROPEAN PATENT APPLICATION

(43) Date of publication:
11.02.2009 Bulletin 2009/07

(51) Int Cl.:
H04N 7/173 (2006.01)          H04N 5/445 (2006.01)

(21) Application number: 08014235.9

(22) Date of filing: 08.08.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 10.08.2007 JP 2007209729

(71) Applicant: Kabushiki Kaisha Toshiba
Minato-ku
Tokyo (JP)

(72) Inventors:
• Orihara, Ryohei
Tokyo (JP)
• Murakami, Tomoko
Tokyo (JP)
• Mori, Kouichirou
Tokyo (JP)

(74) Representative: HOFFMANN EITLE
Patent- und Rechtsanwälte
Arabellastrasse 4
81925 München (DE)

(54) **Program searching apparatus and program searching method**

(57) There is provided with a program searching apparatus, including: an extracting unit extracting words or phrases described in plural program information as keywords; an identifying unit identifying categories to which the keywords belongs; a first calculating unit calculating a number of program information containing the keywords as first information; a second calculating unit calculating a number of keywords that belong to the cate- gories as second information; a specifying unit specifying one program as a search query; a weight calculating unit calculating, for each of query keywords extracted from program information of the search query, a weight based on the first and second information; a similarity calculat- ing unit calculating a similarity level to the search query with respect to a search target program according to the weight corresponding to a query keyword included in the program information of the search target program.

FIG. 1

**Description**

CROSS REFERENCE TO RELATED APPLICATIONS

This application is based upon and claims the benefit of priority from the prior Japanese Patent Applications No. 2007-209729, filed on August 10, 2007; the entire contents of which are incorporated herein by reference.

BACKGROUND OF THE INVENTION

Field of the Invention

The present invention relates to a program searching apparatus and program searching method for searching for a program similar to a specified program (group) on a television receiving/accumulating/replaying system that permits viewing of broadcast programs on multiple channels and utilization of meta-information about broadcast program contents in the form of an Electronic Program Guide (EPG).

Related Art

In recent years, BS/CS broadcastings have become widely available in addition to traditional terrestrial TV broadcasting, ushering in a real multi-channel era. With this background, systems and/or services have been proposed that recommend programs to a user based on program metadata including genre. Some of such systems and services learn a user's preference based on his/her history of viewing and the like and recommend a program in accordance with the learned preference. A function of searching for a program similar to a certain program can be utilized on a program searching apparatus that provides the function itself as a primary feature, for example. Such a function can be also utilized for identifying programs that are similar to a program (B) that was not watched even though it was recommended on a program recommending apparatus and/or a program (W) that was watched even though it was not recommended and making recommendation that takes into consideration the identified programs so as to improve the appropriateness of recommendation. Such a search for similar programs can be realized by applying similar document search, which has been developed in the field of information retrieval, to program metadata.

However, the conventional techniques outlined above have such drawbacks as follows.

Information retrieval generally defines similarity among documents by assigning a weight to a word based on "tf-idf" (term frequency-inverse document frequency) to vectorize a document, but "tf" (in-document term frequency) is often meaningless in a short document like an EPG (Electronic Program Guide), thus making the information retrieval approach less effective.

Also, an EPG involves a category that is obtained based on document structure (e.g., a performer's name) in addition to a word/phrase category that results from natural language processing, such as a part of speech or a semantic class. However, the former information cannot be exploited just by employing an approach of information retrieval in a simple manner.

In addition, some of programs appearing in an EPG have a small amount of program information, e.g., the description thereof being extremely short, and a similarity search performed with such a program as a search query has low reliability, leading to the user's complaint about the capability of a program searching apparatus. Also, program recommendation that takes into account a program similar to the program "B" and/or "W" excessively generalizes the program "B" and/or "W", which possibly causes degradation of recommendation appropriateness.

SUMMARY OF THE INVENTION

According to an aspect of the present invention, there is provided with a program searching apparatus, comprising:

an EPG acquiring unit configured to acquire EPG (Electronic Program Guide) data including a plurality of program information that describe contents of a plurality of programs, via a network or a broadcasting network;
a keyword extracting unit configured to extract words or phrases that are described in the plurality of program information and that are different from one another, as keywords;
an identifying unit configured to identify categories to which the keywords belong;
a first calculating unit configured to calculate a number of program information containing each of the keywords as first calculation information, respectively;
a second calculating unit configured to calculate a number of keywords that belong to each of the categories as second calculation information, respectively ;

a specifying unit configured to specify at least one program out of the plurality of programs as a search query;

a weight calculating unit configured to calculate, for each of query keywords which are keywords extracted from program information of the search query, a weight based on the first calculation information corresponding to the query keyword and the second calculation information corresponding the category to which the query keyword belongs, respectively;

a detecting unit configured to detect a query keyword included in each of program information corresponding to each of search target programs that are different from the search query among the plurality of programs;

a similarity calculating unit configured to calculate a similarity level to the search query according to the weight corresponding to a detected query keyword for each of the search target programs, respectively;

a similar program identifying unit configured to identify a similar search target program that is similar to the search query based on each calculated similarity level from among the search target programs; and

an outputting unit configured to output information that indicates the similar search target program.

According to an aspect of the present invention, there is provided with a program searching method, comprising:

acquiring EPG (Electronic Program Guide) data including a plurality of program information that describe contents of a plurality of programs, via a network or a broadcasting network;

extracting words or phrases that are described in the plurality of program information and that are different from one another, as keywords;

identifying categories to which the keywords belong;

calculating a number of program information containing each of the keywords as first calculation information, respectively;

calculating a number of keywords that belong to each of the categories as second calculation information, respectively ;

specifying at least one program out of the plurality of programs as a search query;

calculating, for each of query keywords which are keywords extracted from program information of the search query, a weight based on the first calculation information corresponding to the query keyword and the second calculation information corresponding the category to which the query keyword belongs, respectively;

detecting a query keyword included in each of program information corresponding to each of search target programs that are different from the search query among the plurality of programs;

calculating a similarity level to the search query according to the weight corresponding to a detected query keyword for each of the search target programs, respectively;

identifying a similar search target program that is similar to the search query based on each calculated similarity level from among the search target programs; and

outputting information that indicates the similar search target program.

BRIEF DESCRIPTION OF THE DRAWINGS

FIG. 1 shows an overall configuration of a program searching apparatus according to an embodiment of the invention;

FIG. 2 illustrates a flow of preparation for using a similar program searching function in the embodiment of the invention;

FIG. 3 shows an example of an EPG that can be acquired from a broadcast wave;

FIG. 4 shows an example of an inverted file;

FIG. 5 is a flowchart illustrating the flow of similar search processing;

FIG. 6 is a flowchart illustrating the flow of processing in the first embodiment of the invention;

FIG. 7 is a flowchart illustrating the flow of processing for calculating a program information amount in the first embodiment of the invention;

FIG. 8 shows an exemplary GUI that is presented by a search query specifying interface in the first embodiment of the invention;

FIG. 9 is a flowchart illustrating the flow of processing in a second embodiment of the invention; and

FIG. 10 is a flowchart illustrating the flow of processing for calculating a program information amount in the second embodiment of the invention.

DETAILED DESCRIPTION OF THE INVENTION

Embodiments of the present invention are described below with respect to drawings.

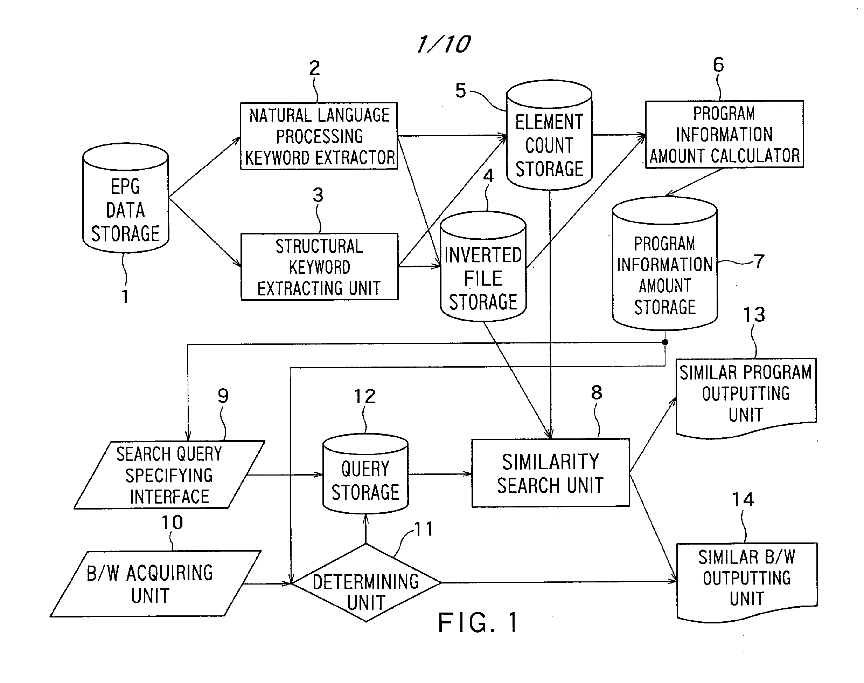

FIG. 1 is a block diagram showing an overall configuration of a program searching apparatus according to an embodiment of the invention.

The usage flow of this program searching apparatus is different for first and second embodiments which are discussed below, but similarity search processing and preliminary processing therefor are common to the first and second embodiments. Accordingly, the similarity search processing and preliminary processing therefor, and blocks pertaining to those processings: an EPG (Electronic Program Guide) data storage 1, a natural language processing keyword extractor 2, a structural keyword extracting unit 3, an inverted file storage 4, and an element count storage 5, are described first.

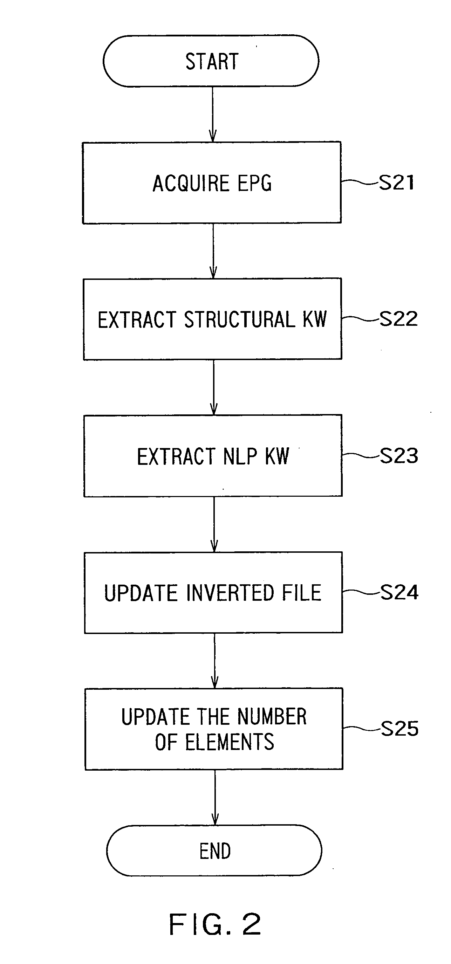

FIG. 2 is a flowchart illustrating the flow of preliminary processing for similarity search.

First, the program searching apparatus acquires a new EPG at an appropriate time, such as at midnight every day, and stores the acquired EPG data in the EPG data storage 1 (S21). The EPG may be acquired from SI signals of digital broadcasting or from a website on the Internet that provides EPGs. The EPG data storage 1 may include an EPG acquiring unit for acquiring EPG data via a network.

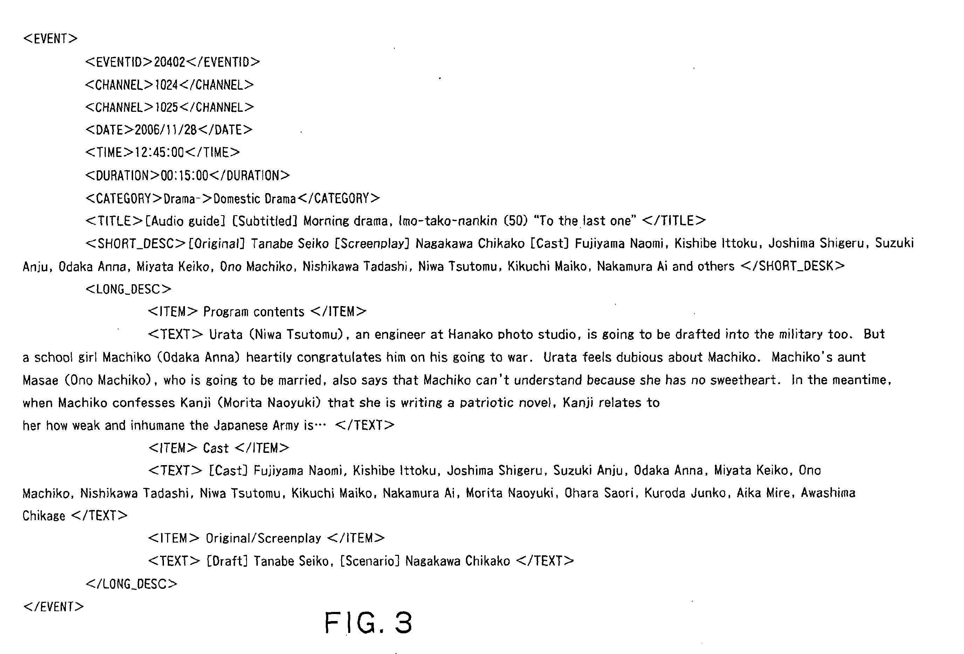

FIG. 3 shows an example of formatted data of an EPG that has been acquired from SI signals of digital broadcasting.

The EPG is structured with tags, such as <TITLE> that represents a title and <CATEGORY> that represents a genre. As can be seen in description contained between <SHORT_DESC> and </SHORT_DESC> that represent a short program contents as well as in portions following description of "Cast" and following description of "Original/ Screenplay" within description between <LONG_DESC> and </LONG_DESC> that represent a long program contents, denotations such as "[Cast]" and "[Screenplay]" are used to explicitly show what is represented by the character strings that follow the denotations. A characteristic of an EPG is that the amount of description is small and the frequency of the same word appearing a number of times is low. Information on cast or a screenplay writer such as shown in FIG. 3 is also contained in an EPG acquired from a website on the Internet, of course.

The structural keyword extracting unit 3 extracts information on the genre, cast and screenplay of a program by extracting character strings that lie between tags and character strings that follow denotations as keywords based on such tags and denotations in the EPG (structural KW or keyword extraction) (S22). When the same keyword appears a plurality of times, only one of them has to be extracted. The program genre, cast, and screenplay writer are examples of categories.

The natural language processing keyword extractor 2 applies a known technique such as morphological analysis or semantic class analysis to the content description and title of a program in the EPG so as to extract keywords that cannot be extracted by structural keyword extraction (NLP KW extraction) (S23). That is, as morphological analysis can obtain separations between words and the part-of-speech of words in a sentence, keywords can be obtained by specifying the part-of-speech of a word which should be extracted as a keyword, e.g., as a noun or adjective. With semantic class analysis, which performs semantically more advanced processing than morphological analysis, it is possible to extract a word or phrase having a category name (a semantic class) from a sentence, such as "Japanese prefecture" or "professional baseball team ". Thus, keywords can be also obtained by specifying a semantic class that should be extracted as a keyword. When the same keyword appears a plurality of times, only one of them has to be extracted. Morphological analysis or semantic class analysis may use a dictionary that maps keywords to categories for defining the category of a keyword.

As processing at S22 and S23 reveals keywords contained in the EPG (or program), the inverted file storage 4 stores data that shows correspondence between the program and the keywords contained in that program (S24). This data may be of a straightforward format that maintains a keyword list for each program ID, but advantageously is maintained a known format called an inverted file in view of efficiency in subsequent search processing.

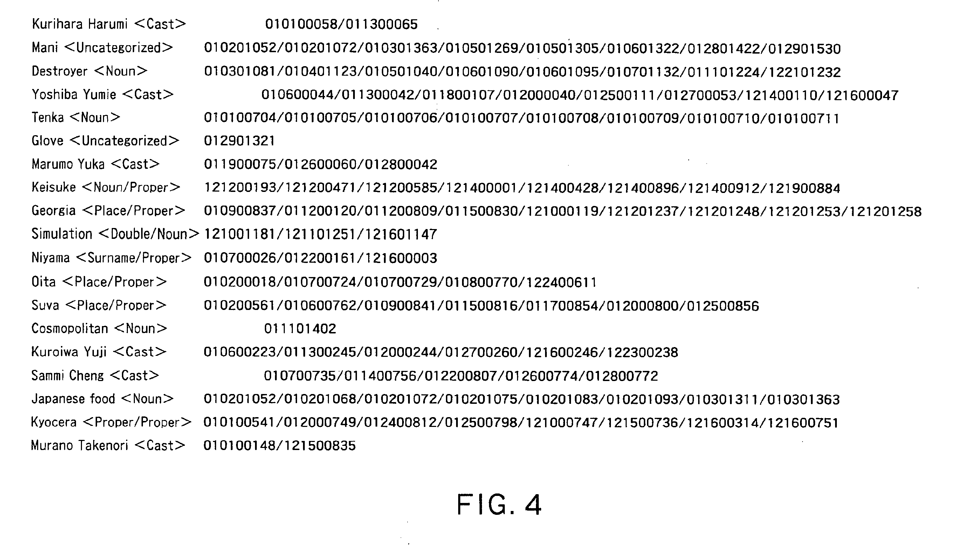

An inverted file maintains, for a keyword, a list of program IDs that contain the keyword. A portion of an exemplary inverted file is shown in FIG. 4. For example, a keyword "Japanese food" belongs to a category "Name", and programs that contain "Japanese food" are ones with program IDs: 010201052, 010201068, 010201072, 010201075, 010201083, 010201093, 010301311, and 010301363.

The present example assumes that data showing the correspondence between programs and keywords is stored in the form of an inverted file, and the inverted file storage 4 updates the inverted file using the data resulting from the processing at S22 and S23 that shows the correspondence between program IDs and keywords which are contained in those program IDs. The inverted file storage 4 includes a first calculating unit, for example.

The element count storage 5 counts the number of different keywords in each category and stores the number of different keywords for each category (S25). This is carried out by doing nothing if a keyword extracted at S22 and S23 is already present in the inverted file, or incrementing a counter prepared for each category (e.g., noun, cast and the like) if the keyword is not present in the file yet. For example, when the inverted file is as illustrated in FIG. 4, if a new keyword "Tokkyo Taro" that belongs to the "Cast" category has been extracted at S22 or S23, the counter for the category "Cast" is incremented to six (i.e., when the inverted file is as illustrated in FIG. 4, the category "Cast" has five keywords) because the keyword "Tokkyo Taro" is not present in the inverted file of FIG. 4 yet. The element count storage 5 includes a second calculating unit, for example.

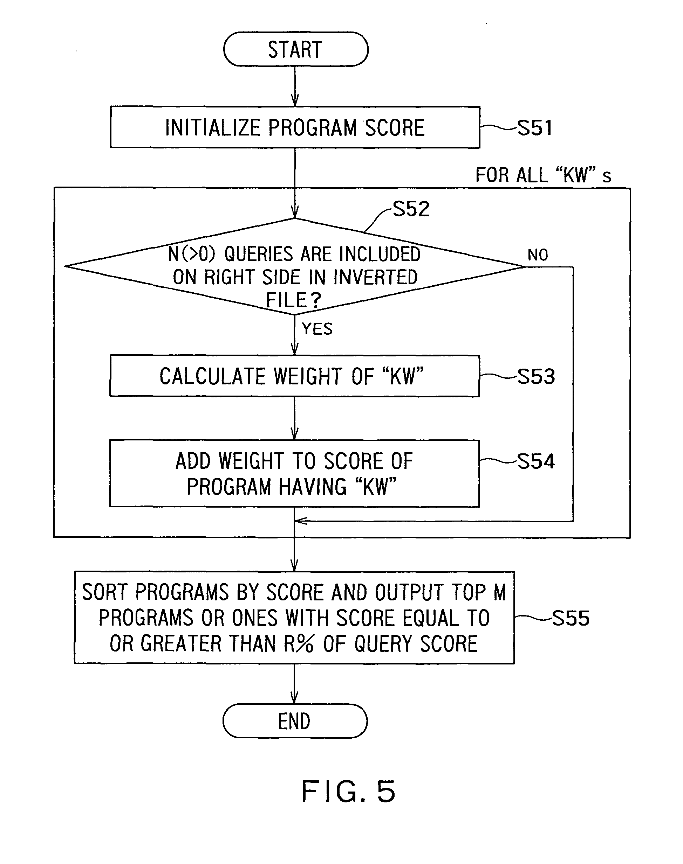

Next, description is given on processing of searching for a program similar to a program group (or a query) (similar search processing) when a program group which includes one or more programs (hereinafter such a program group will be called a search query or just a query, and each program contained in the query may be sometimes referred to as a query program) is given. This similarity search processing is performed by a similarity search unit 8. The similarity search unit 8 includes a weight calculating unit, a detecting unit, a similarity calculating unit, and a similar program calculating unit, for example. In the following, the flow of similarity search processing is illustrated in the flowchart of FIG. 5.

First, a variable (or a score) that represents the similarity level to the query is initialized for all programs (S51). The all programs relevant to the initialization may include the query (which is made of one or more query programs) itself, and this example assumes the query is included in them. A program relevant to the initialization, namely a program covered by a search, represents a search target program, for example.

Then, for all keywords contained in the query (when the query includes a number of query programs, the logical sum of keywords contained in each of the query programs), a weight of each keyword (a query keyword) is calculated, and the sum of the weights of keywords that have commonality to the query keyword (or common keywords) is calculated as a score (or alternatively a similarity level) for each program. To describe specifically, processing as described below can be performed based on the inverted file storage 4, for example.

First, for each keyword contained in the inverted file, the number of query programs which are included in programs that contain that keyword (programs on the right-hand part) is counted and the number is set as "N" (S52). If N>0 (YES at S52), that is, the keyword is a query keyword, a weight "W(kw)" for that keyword "KW" is calculated according to the formula below (S53). If N=0 (NO at S52), the flow proceeds to the next keyword without calculating a weight.

$$W(kw) = idf(kw) \cdot f(\frac{1}{CS(c)}) \cdot N$$

where "idf (kw)" is an "idf" (inverse document frequency) value, namely the "idf" weight of the keyword "KW", and this value is generally defined as:

$$idf(kw) = \log(\frac{A}{\text{the number of programs that contain "kw"}})$$

with the total number of programs as "A". In embodiments of the present invention, however, various modifications may be made, such as not using a logarithm or adding a positive constant to the denominator, as long as the value is a monotonically increasing function of the inverse of the number of programs that contain the keyword "KW". Since the inverted file is employed, the number of programs that contain the keyword "KW" is determined as the number of programs on the right side.

Also, "c" is a category to which the keyword "KW" belongs and "CS(c)" is the number of different keywords that belong to the category "c". "f" is an arbitrary monotonically increasing function, but typically a formula:

$$f(x) = \log(x \cdot \sum_c CS(c))$$

or a similar formula can be used.

Thus, the weight "W(kw)" of the keyword "KW" is a value determined by adjusting (e.g., dividing) the "idf" weight with respect to the number of different keywords that belong to the category "c" of the keyword "KW" and further weighting it with the number of keywords "KW" that are contained in the query. For example, when the category of a keyword "1" is "Place", and the category of another keyword "2" is "Baseball Team", and the number of different keywords contained in the category "Place" is 5000 and the number of different keywords contained in the category "Baseball Team" is 12, the "idf" value of the "Place" of course tends to be large as compared to that of "Baseball Team", but the weight "W(kw)" of the keyword "KW" is corrected such as by dividing the former by 5000 and the latter by 12.

After the weight "W(kw)" thus determined is added to the variable (or score) for the programs that contain the keyword "KW" (S54), the flow proceeds to the next keyword in the inverted file. The scores the programs have been obtained when processing on all keywords in the inverted file is completed.

Thereafter, the programs are sorted in descending order of score, and in accordance with a predetermined threshold value "M", the top M programs (or alternatively, the top M programs except the query program) are output as similar programs to a similar program outputting unit 13, which is a displaying unit for displaying an image for the user, for example (S55). Alternatively, with reference to the score of the query (when the query includes a number of query programs, the maximum, minimum, median, or average value of scores of those query programs may be used as the score of the query), and in accordance with a predetermined percentage R%, programs having a score equal to or greater than R% of the query score may be output as similar programs to the similar program outputting unit 13.

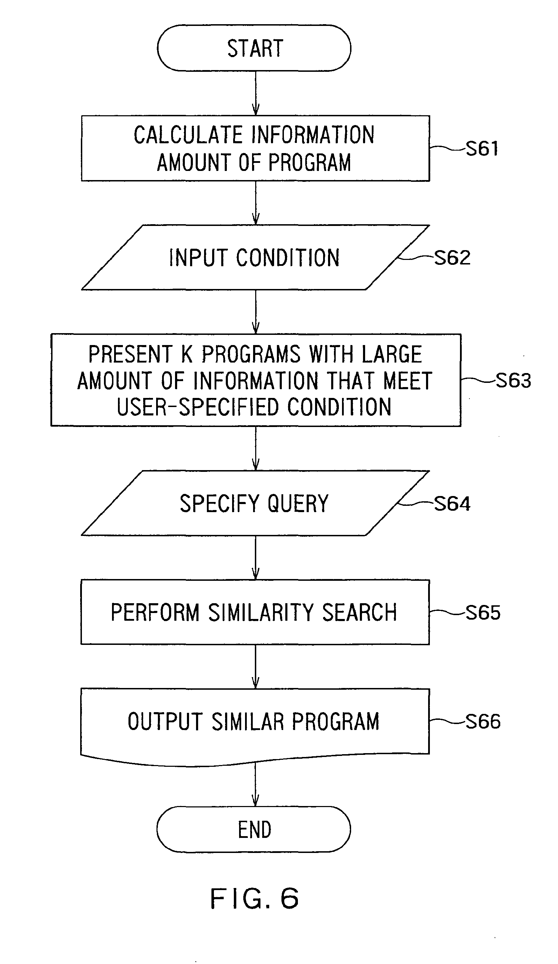

FIG. 6 shows a flow of processing in the first embodiment of the invention. The first embodiment of the present invention presents a program group to a user, prompts the user to select one or more programs (i.e., queries), and shows programs similar to the selected query to the user.

First, a program information amount calculator 6 calculates the information amounts of all programs (S61).

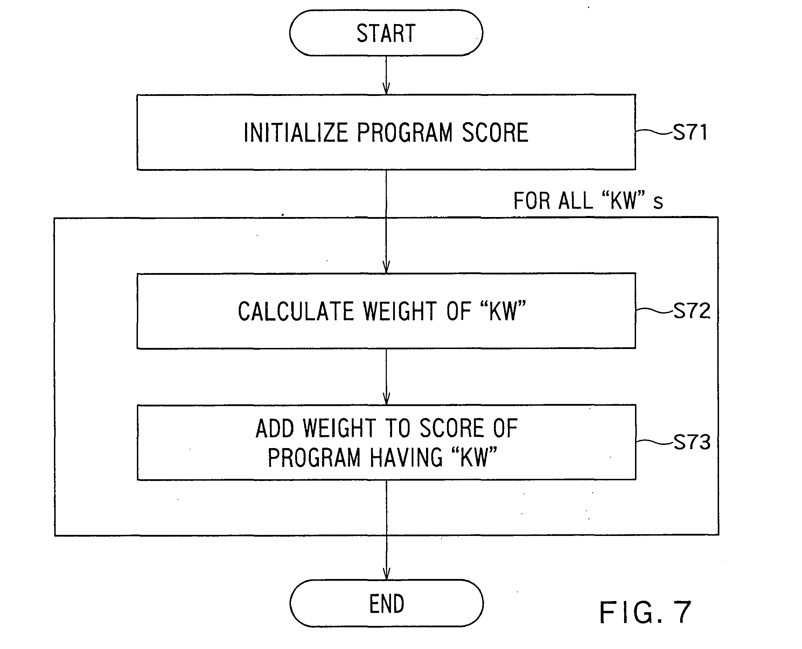

This is carried out by calculating weights for all keywords contained in each of the programs included in the EPG and adding or summing the weights. A flow of specific processing is illustrated in the flowchart of FIG. 7. However, the processing shown below is merely an example and the present invention is not limited to the example in any way.

First, one program is picked out and a score that represents the program information amount of the program in question is initialized (S71).

Then, for all keywords contained in the program in question, the following processing is repeated with reference to the inverted file.

The weight "W(kw)" of the keyword "KW" is calculated according to the formula (S72):

$$W(kw) = idf(kw) \cdot f(\frac{1}{CS(c)})$$

where "idf(kw)" is the idf value of the keyword "KW" and is generally defined as:

$$idf(kw) = \log(\frac{A}{\text{the number of programs that contain "kw"}})$$

with the total number of programs as "A". However, various modifications may be made, such as not using a logarithm or adding a positive constant to the denominator, as long as the value is a monotonically increasing function of the inverse of the number of programs that contain the keyword "KW". Since the inverted file is employed, the number of programs that contain the keyword "KW" is determined as the number of programs on the right side corresponding to the keyword "KW" in the inverted file. Also, "c" is a category to which the keyword "KW" belongs and "CS(c)" is the number of different keywords that belong to the category "c". "f" is an arbitrary monotonically increasing function, but typically a formula:

$$f(x) = \log(x \cdot \sum_{c} CS(c))$$

or a similar formula can be used.

The weight "W(kw)" value thus determined is added to the score of the program in question (S73), and the flow proceeds to the next keyword. After weights of all keywords are calculated and added to the score, the final sum (total) obtained for the program is stored in the EPG program information amount storage 7 as its program information amount.

By performing the above-described processing (S71 to S73) on all the other programs, program information amounts are obtained and stored in the EPG program information amount storage 7 for all the programs.

Referring back to FIG. 6, to let the user specify a query, the user is prompted to specify a condition that should be met by the query (or each query program included in the query) (S62). This condition is a genre, channel, and or like. The user's specification is accepted by a search query specifying interface 9.

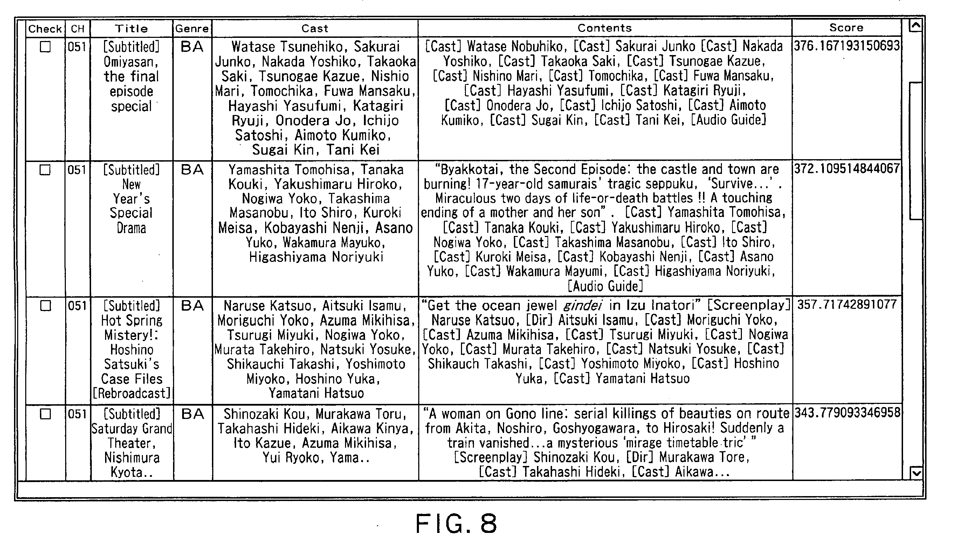

The search query specifying interface 9 selects K programs having a large program information amount from among those programs that meet the user-specified condition based on the EPG program information amount storage 7, and presents the selected programs as query candidates (S63). For example, the selected K programs (query candidates) are presented on a GUI with checkboxes as shown in FIG. 8.

The search query specifying interface 9 accepts one or more programs selected by the user as queries (S64) and stores the accepted queries in a query storage 12. The search query specifying interface 9 is an example of a specifying unit for designating a query.

The similarity search unit 8 searches for programs that are similar to the queries stored in the query storage 12 (S65), and outputs data on programs found in the search to the similar program outputting unit 13 (S66). The similar program outputting unit 13 displays the program data inputted from the similarity search unit 8 on a screen.

As described, according to the first embodiment of the invention, it is possible to realize a program similarity search function with a higher demonstration effect by determining the similarity among programs in conformity with characteristics of an EPG (e.g., the amount of description is small and the frequency of the same word appearing a number of times is low) by utilizing the keyword weight "W(kw)".

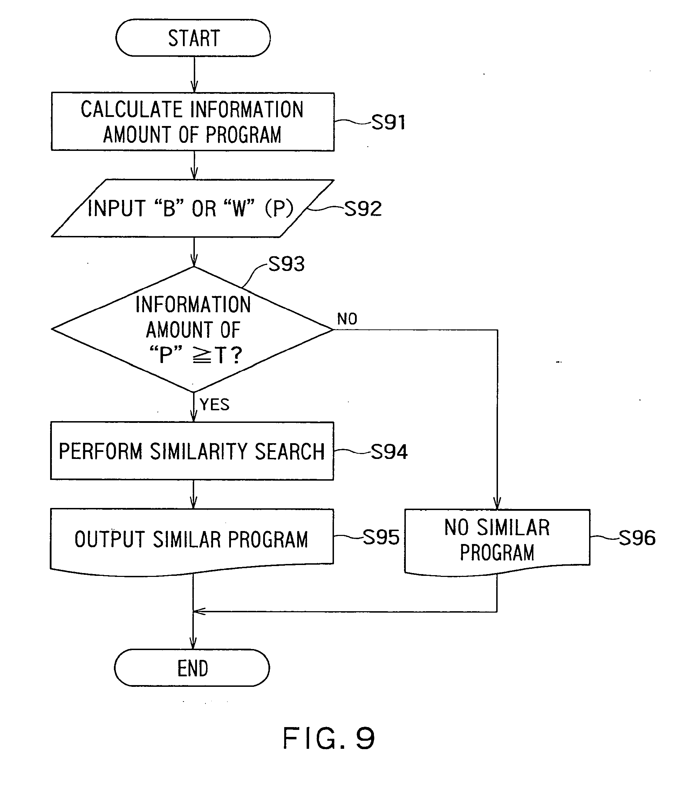

FIG. 9 shows a flow of processing in a second embodiment of the invention. The second embodiment of the invention is intended for utilization as an addition to a known program recommending system. This embodiment keeps track of a program that has not been watched by the user even through it was recommended by the program recommending system (program "B") and a program that has been watched by the user even through it was not recommended by the program recommending system (program "W"), and if a program similar to the program "B" is included in the output (a recommendation list) from the program recommending system, it deletes the program from the recommendation list, and adds a program similar to the program "W" to the recommendation list if it is not included in the list, thereby realizing highly satisfactory recommendation. The flow of processing in the second embodiment is described below in detail.

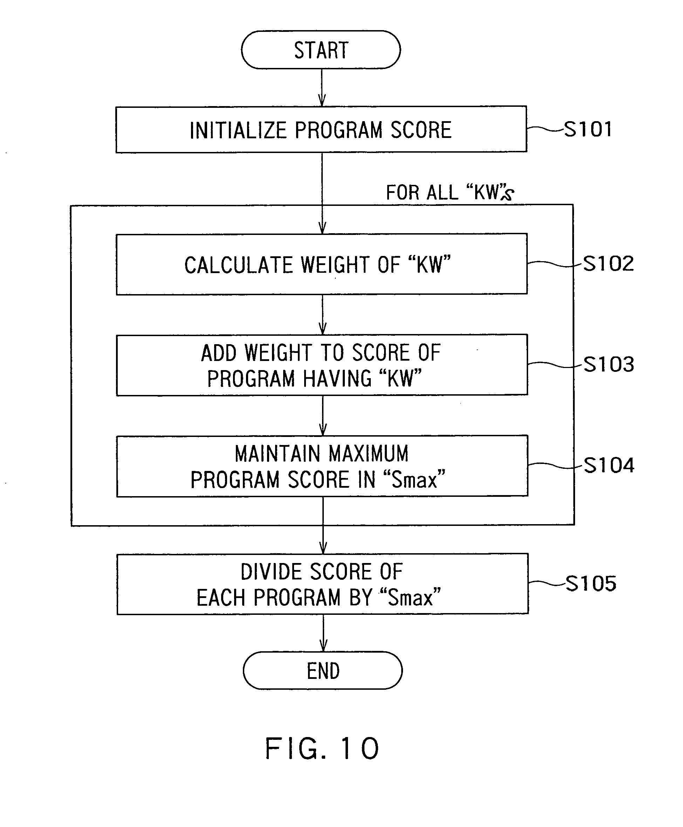

First, the program information amount calculator 6 calculates the program information amounts of all programs (S91). This is carried out by calculating weights of all keywords contained in each of the programs included in the EPG and adding or summing the weights. A flow of specific processing is illustrated in the flowchart of FIG. 10. However, the processing shown below is merely an example and the present invention is not limited to the example in any way.

First, a score that represents the program information amount of each program is initialized (S101).

Then, with respect to the logical sum of all keywords contained in the all programs, the following processing is repeated with reference to an inverted file.

The weight "W(kw)" of the keyword "KW" is calculated according to the formula (S102):

$$W(kw) = idf(kw) \cdot f(\frac{1}{CS(c)})$$

where "idf(kw)" is the idf value of the keyword "KW" and is generally defined as:

$$idf(kw) = \log(\frac{A}{\text{the number of programs that contain "kw"}})$$

with the total number of programs as "A". However, various modification may be made, such as not using a logarithm or adding a positive constant to the denominator, as long as the value is a monotonically increasing function of the inverse of the number of programs that contain the keyword "KW". Since the inverted file is employed, the number of programs that contain the keyword "KW" is determined as the number of programs on the right side corresponding to the keyword "KW" in the inverted file.

"c" is a category to which the keyword "KW" belongs and "CS(c)" is the number of different keywords that belong to the category "c". "f" is an arbitrary monotonically increasing function, but typically a formula:

$$f(x) = \log(x \cdot \sum_{c} CS(c))$$

or a similar formula can be used.

The weight "W(kw)" value thus determined is added to the score of programs that have the keyword "KW" (programs on the right-hand part corresponding to the keyword "KW" in the inverted file) (S103). Then, the present maximum score is maintained in "Smax" (S104), and the flow proceeds to the next keyword.

When processing for all keywords is completed, program information amount is normalized to a range from 0 to 1 inclusive ([0, 1]) by dividing the score of each program by "Smax" (S105). Then, the normalized score of each program is maintained in the EPG program information amount storage 7 as a program information amount.

Referring to FIG. 9 again, a B/W acquiring unit 10 next receives one program maintained as the program "B" or "W" from a program recommending system which has been specified in advance, and sets the program (query) received as a program "P" (S92). The B/W acquiring unit 10 is an example of the specifying unit.

A determining unit 11 determines whether the program information amount of the program "P" is smaller than a predetermined threshold "T", and if the program information amount of the program "P" is smaller than the threshold "T" (NO at S 93), the determining unit 11 does not perform search processing in order to avoid a meaningless similarity search and determines that there is no program similar to the program "P", and passes a notice that there is no program similar to the program "P" to a similar B/W outputting unit 14 (S96). The similar B/W outputting unit 14 then notifies the program recommending system that there is no program similar to the program "P". When the program recommending system is notified that there is no program similar to the program "P", the program recommending system recommends programs in a conventional manner. That is, the program recommending system does not update the recommendation list.

On the other hand, if the program information amount of the program "P" is equal to or greater than the threshold "T" (YES at S93), the program "P" is stored in the query storage 12 as a query, and the similarity search unit 8 performs a similarity search based on the query in the EPG storage 12 (S94) and passes information on a program that has been found in the similarity search to the similar B/W outputting unit 14. The similar B/W outputting unit 14 provides information on the program passed from the similarity search unit 8 back to the program recommending system (S95). The program recommending system uses the information received from the similar B/W outputting unit 14 to update the recommendation list. Specifically, when the program "P" is a program "B", the program recommendation system deletes the program indicated in the received information from the recommendation list, and when the program "P" is a program "W", it adds the similar program indicated in the received information to the recommendation list. This realizes highly satisfactory recommendation.

As described above, the second embodiment of the invention can realize generation of a recommendation list that is closer to the user's preference without requiring a long learning time by avoiding meaningless similarity search on programs with a small program information amount.

## Claims

1. A program searching apparatus, comprising:

   an EPG acquiring unit configured to acquire EPG (Electronic Program Guide) data including a plurality of program information that describe contents of a plurality of programs, via a network or a broadcasting network;
   a keyword extracting unit configured to extract words or phrases that are described in the plurality of program information and that are different from one another, as keywords;
   an identifying unit configured to identify categories to which the keywords belong;
   a first calculating unit configured to calculate a number of program information containing each of the keywords as first calculation information, respectively;
   a second calculating unit configured to calculate a number of keywords that belong to each of the categories as second calculation information, respectively ;
   a specifying unit configured to specify at least one program out of the plurality of programs as a search query;
   a weight calculating unit configured to calculate, for each of query keywords which are keywords extracted from program information of the search query, a weight based on the first calculation information corresponding to the query keyword and the second calculation information corresponding the category to which the query keyword belongs, respectively;
   a detecting unit configured to detect a query keyword included in each of program information corresponding to each of search target programs that are different from the search query among the plurality of programs;
   a similarity calculating unit configured to calculate a similarity level to the search query according to the weight corresponding to a detected query keyword for each of the search target programs, respectively;
   a similar program identifying unit configured to identify a similar search target program that is similar to the search query based on each calculated similarity level from among the search target programs; and
   an outputting unit configured to output information that indicates the similar search target program.

2. The apparatus according to claim 1, wherein the weight calculating unit calculates the weight of each of the query keywords such that the weight becomes smaller as a value indicated by the first calculation information and a value indicated by the second calculation information becomes larger.

**3.** The apparatus according to claim 2, wherein the weight calculating unit calculates the weight of each of the query keywords by calculating a product of a monotonically increasing function of an inverse of the value indicated by the first calculation information and a monotonically increasing function of the inverse of the value indicated by the second calculation information.

**4.** The apparatus according to claim 1, wherein

the specifying unit specifies a search query that includes two or more programs; and
the weight calculating unit calculates the weight of the query keyword such that the weight becomes larger as a number of programs that contain the query keyword is more in the search query.

**5.** The apparatus according to claim 4, wherein the weight calculating unit calculates the weight of the query keyword by calculating a product of a monotonically increasing function of the inverse of a value indicated by the first calculation information, a monotonically increasing function of the inverse of a value indicated by the second calculation information, and the number of programs that contain the query keyword in the search query.

**6.** The apparatus according to claim 1, further comprising

a program information amount calculator configured to calculate a program information amount of the search query by an operation using the weight of each of the query keywords, wherein
when the program information amount of the search query does not satisfy a predetermined threshold value, the similar program identifying unit determines that there is no similar search target program, and
the outputting unit outputs information that indicates that there is no similar search target program or information that indicates the search query itself.

**7.** The apparatus according to claim 6, wherein the program information amount calculator calculates the program information amount of the search query by adding the weight of each of the query keywords.

**8.** The apparatus according to claim 6, wherein

the weight calculating unit calculates a weight for each of the keywords extracted by the keyword extracting unit;
the program information amount calculator calculates program information amount of each of the plurality of the programs by an operation using weights of keywords extracted from each of the plurality of program information, and normalizes the program information amount of the search query by dividing it by a maximum value of each calculated program information amounts; and
the similar program identifying unit determines whether or not normalized program information amount of the search query satisfies the predetermined threshold value.

**9.** The apparatus according to claim 1, wherein

the specifying unit specifies the search query according to an indication from a user; and
the outputting unit presents the user with information that specifies a similar search target program identified by the similar program identifying unit.

**10.** The apparatus according to claim 1, wherein

the specifying unit specifies the search query according to an indication from a program recommending system which selects a program to be recommended to the user and presents a selected program to the user; and
the outputting unit provides information specifying the similar search target program identified by the similar program identifying unit back to the program recommending system.

**11.** A program searching method, comprising:

acquiring EPG (Electronic Program Guide) data including a plurality of program information that describe contents of a plurality of programs, via a network or a broadcasting network;
extracting words or phrases that are described in the plurality of program information and that are different from one another, as keywords;

identifying categories to which the keywords belong;

calculating a number of program information containing each of the keywords as first calculation information, respectively;

calculating a number of keywords that belong to each of the categories as second calculation information, respectively ;

specifying at least one program out of the plurality of programs as a search query;

calculating, for each of query keywords which are keywords extracted from program information of the search query, a weight based on the first calculation information corresponding to the query keyword and the second calculation information corresponding the category to which the query keyword belongs, respectively;

detecting a query keyword included in each of program information corresponding to each of search target programs that are different from the search query among the plurality of programs;

calculating a similarity level to the search query according to the weight corresponding to a detected query keyword for each of the search target programs, respectively;

identifying a similar search target program that is similar to the search query based on each calculated similarity level from among the search target programs; and

outputting information that indicates the similar search target program.

1/10

FIG. 1

EP 2 023 634 A1

START

ACQUIRE EPG — S21

EXTRACT STRUCTURAL KW — S22

EXTRACT NLP KW — S23

UPDATE INVERTED FILE — S24

UPDATE THE NUMBER OF ELEMENTS — S25

END

FIG. 2

```
<EVENT>
        <EVENTID>20402</EVENTID>
        <CHANNEL>1024</CHANNEL>
        <CHANNEL>1025</CHANNEL>
        <DATE>2006/11/28</DATE>
        <TIME>12:45:00</TIME>
        <DURATION>00:15:00</DURATION>
        <CATEGORY>Drama->Domestic Drama</CATEGORY>
        <TITLE>[Audio guide] [Subtitled] Morning drama, Imo-tako-nankin (50) "To the last one" </TITLE>
        <SHORT_DESC>[Original] Tanabe Seiko [Screenplay] Nagakawa Chikako [Cast] Fujiyama Naomi, Kishibe Ittoku, Joshima Shigeru, Suzuki
Anju, Odaka Anna, Miyata Keiko, Ono Machiko, Nishikawa Tadashi, Niwa Tsutomu, Kikuchi Maiko, Nakamura Ai and others </SHORT_DESK>
        <LONG_DESC>
                <ITEM> Program contents </ITEM>
                <TEXT> Urata (Niwa Tsutomu), an engineer at Hanako photo studio, is going to be drafted into the military too. But
a school girl Machiko (Odaka Anna) heartily congratulates him on his going to war. Urata feels dubious about Machiko. Machiko's aunt
Masae (Ono Machiko), who is going to be married, also says that Machiko can't understand because she has no sweetheart. In the meantime,
when Machiko confesses Kanji (Morita Naoyuki) that she is writing a patriotic novel, Kanji relates to
her how weak and inhumane the Japanese Army is… </TEXT>
                <ITEM> Cast </ITEM>
                <TEXT> [Cast] Fujiyama Naomi, Kishibe Ittoku, Joshima Shigeru, Suzuki Anju, Odaka Anna, Miyata Keiko, Ono
Machiko, Nishikawa Tadashi, Niwa Tsutomu, Kikuchi Maiko, Nakamura Ai, Morita Naoyuki, Ohara Saori, Kuroda Junko, Aika Mire, Awashima
Chikage </TEXT>
                <ITEM> Original/Screenplay </ITEM>
                <TEXT> [Draft] Tanabe Seiko, [Scenario] Nagakawa Chikako </TEXT>
        </LONG_DESC>
</EVENT>
```

# FIG. 3

Kurihara Harumi <Cast>           010100058/011300065

Mani <Uncategorized>      010201052/010201072/010301363/010501269/010501305/010601322/012801422/012901530

Destroyer <Noun>         010301081/010401123/010501040/010601090/010601095/010701132/011101224/122101232

Yoshiba Yumie <Cast>        010600044/011300042/011800107/012000040/012500111/012700053/121400110/121600047

Tenka <Noun>             010100704/010100705/010100706/010100707/010100708/010100709/010100710/010100711

Glove <Uncategorized>    012901321

Marumo Yuka <Cast>       011900075/012600060/012800042

Keisuke <Noun/Proper>    121200193/121200471/121200585/121400001/121400428/121400896/121400912/121900884

Georgia <Place/Proper>   010900837/011200120/011200809/011500830/121000119/121201237/121201248/121201253/121201258

Simulation <Double/Noun> 121001181/121101251/121601147

Niyama <Surname/Proper>  010700026/012200161/121600003

Oita <Place/Proper>      010200018/010700724/010700729/010800770/122400611

Suva <Place/Proper>      010200561/010600762/010900841/011500816/011700854/012000800/012500856

Cosmopolitan <Noun>          011101402

Kuroiwa Yuji <Cast>      010600223/011300245/012000244/012700260/121600246/122300238

Sammi Cheng <Cast>          010700735/011400756/012200807/012600774/012800772

Japanese food <Noun>     010201052/010201068/010201072/010201075/010201083/010201093/010301311/010301363

Kyocera <Proper/Proper>  010100541/012000749/012400812/012500798/121000747/121500736/121600314/121600751

Murano Takenori <Cast>   010100148/121500835

# FIG. 4

EP 2 023 634 A1

START

INITIALIZE PROGRAM SCORE — S51

FOR ALL "KW" s

S52

N(>0) QUERIES ARE INCLUDED ON RIGHT SIDE IN INVERTED FILE? — NO

YES

CALCULATE WEIGHT OF "KW" — S53

ADD WEIGHT TO SCORE OF PROGRAM HAVING "KW" — S54

SORT PROGRAMS BY SCORE AND OUTPUT TOP M PROGRAMS OR ONES WITH SCORE EQUAL TO OR GREATER THAN R% OF QUERY SCORE — S55

END

FIG. 5

START

CALCULATE INFORMATION AMOUNT OF PROGRAM —S61

INPUT CONDITION —S62

PRESENT K PROGRAMS WITH LARGE AMOUNT OF INFORMATION THAT MEET USER-SPECIFIED CONDITION —S63

SPECIFY QUERY —S64

PERFORM SIMILARITY SEARCH —S65

OUTPUT SIMILAR PROGRAM —S66

END

FIG. 6

EP 2 023 634 A1

```
           ┌──────────────┐
           │    START     │
           └──────┬───────┘
                  │
                  ▼
    ┌─────────────────────────────┐
    │   INITIALIZE PROGRAM SCORE   │────S71
    └─────────────┬───────────────┘
                  │        FOR ALL "KW" s
    ┌─────────────┼───────────────────────────┐
    │             ▼                            │
    │  ┌─────────────────────────────┐         │
    │  │   CALCULATE WEIGHT OF "KW"   │────S72  │
    │  └─────────────┬───────────────┘         │
    │                │                         │
    │                ▼                         │
    │  ┌─────────────────────────────┐         │
    │  │   ADD WEIGHT TO SCORE OF     │────S73  │
    │  │   PROGRAM HAVING "KW"        │         │
    │  └─────────────┬───────────────┘         │
    └────────────────┼─────────────────────────┘
                     ▼
           ┌──────────────┐
           │     END      │
           └──────────────┘
```

FIG. 7

| Check | CH | Title | Genre | Cast | Contents | Score |
|---|---|---|---|---|---|---|
| ☐ | 051 | [Subtitled] Omiyasan, the final episode special | BA | Watase Tsunehiko, Sakurai Junko, Nakada Yoshiko, Takaoka Saki, Tsunogae Kazue, Nishio Mari, Tomochika, Fuwa Mansaku, Hayashi Yasufumi, Katagiri Ryuji, Onodera Jo, Ichijo Satoshi, Aimoto Kumiko, Sugai Kin, Tani Kei | [Cast] Watase Nobuhiko, [Cast] Sakurai Junko [Cast] Nakada Yoshiko, [Cast] Takaoka Saki, [Cast] Tsunogae Kazue, [Cast] Nishino Mari, [Cast] Tomochika, [Cast] Fuwa Mansaku, [Cast] Hayashi Yasufumi, [Cast] Katagiri Ryuji, [Cast] Onodera Jo, [Cast] Ichijo Satoshi, [Cast] Aimoto Kumiko, [Cast] Sugai Kin, [Cast] Tani Kei, [Audio Guide] | 376.167193150693 |
| ☐ | 051 | [Subtitled] New Year's Special Drama | BA | Yamashita Tomohisa, Tanaka Kouki, Yakushimaru Hiroko, Nogiwa Yoko, Takashima Masanobu, Ito Shiro, Kuroki Meisa, Kobayashi Nenji, Asano Yuko, Wakamura Mayuko, Higashiyama Noriyuki | "Byakkotai, the Second Episode: the castle and town are burning! 17-year-old samurais' tragic seppuku, 'Survive...'. Miraculous two days of life-or-death battles !! A touching ending of a mother and her son". [Cast] Yamashita Tomohisa, [Cast] Tanaka Kouki, [Cast] Yakushimaru Hiroko, [Cast] Nogiwa Yoko, [Cast] Takashima Masanobu, [Cast] Ito Shiro, [Cast] Kuroki Meisa, [Cast] Kobayashi Nenji, [Cast] Asano Yuko, [Cast] Wakamura Mayumi, [Cast] Higashiyama Noriyuki, [Audio Guide] | 372.109514844067 |
| ☐ | 051 | [Subtitled] Hot Spring Mistery!: Hoshino Satsuki's Case Files [Rebroadcast] | BA | Naruse Katsuo, Aitsuki Isamu, Moriguchi Yoko, Azuma Mikihisa, Tsurugi Miyuki, Nogiwa Yoko, Murata Takehiro, Natsuki Yosuke, Shikauchi Takashi, Yoshimoto Miyoko, Hoshino Yuka, Yamatani Hatsuo | "Get the ocean jewel *gindei* in Izu Inatori" [Screenplay] Naruse Katsuo, [Dir] Aitsuki Isamu, [Cast] Moriguchi Yoko, [Cast] Azuma Mikihisa, [Cast] Tsurugi Miyuki, [Cast] Nogiwa Yoko, [Cast] Murata Takehiro, [Cast] Natsuki Yosuke, [Cast] Shikauch Takashi, [Cast] Yoshimoto Miyoko, [Cast] Hoshino Yuka, [Cast] Yamatani Hatsuo | 357.71742891077 |
| ☐ | 051 | [Subtitled] Saturday Grand Theater, Nishimura Kyota.. | BA | Shinozaki Kou, Murakawa Toru, Takahashi Hideki, Aikawa Kinya, Ito Kazue, Azuma Mikihisa, Yui Ryoko, Yama.. | "A woman on Gono line: serial killings of beauties on route from Akita, Noshiro, Goshyogawara, to Hirosaki! Suddenly a train vanished...a mysterious 'mirage timetable tric'" [Screenplay] Shinozaki Kou, [Dir] Murakawa Tore, [Cast] Takahashi Hideki, [Cast] Aikawa... | 343.779093346958 |

<div align="center">

FIG.8

</div>

EP 2 023 634 A1

```
                    ┌─────────────┐
                    │    START    │
                    └─────────────┘
                           │
                           ▼
              ┌──────────────────────────┐
              │   CALCULATE INFORMATION  │── S91
              │     AMOUNT OF PROGRAM    │
              └──────────────────────────┘
                           │
                           ▼
              ╱──────────────────────────╱
             ╱  INPUT "B" OR "W" (P)    ╱── S92
            ╱──────────────────────────╱
                           │        S93
                           ▼
                       ╱───────╲
                      ╱ INFORMATION ╲
                     ╱  AMOUNT OF   ╲   NO
                     ╲   "P" ≧ T?   ╱─────────────┐
                      ╲───────────╱               │
                           │ YES                  │
                           ▼                      │
              ┌──────────────────────────┐        │
              │ PERFORM SIMILARITY SEARCH│── S94   │
              └──────────────────────────┘        │
                           │                      ▼
                           ▼              ┌────────────────┐
              ┌──────────────────────────┐│   NO SIMILAR   │── S96
              │   OUTPUT SIMILAR PROGRAM │││    PROGRAM     │
              └──────────────────────────┘└────────────────┘
                       S95 │                      │
                           ◄──────────────────────┘
                           ▼
                    ┌─────────────┐
                    │     END     │
                    └─────────────┘
```

FIG. 9

START

INITIALIZE PROGRAM SCORE ⎯S101

FOR ALL "KW"s

CALCULATE WEIGHT OF "KW" ⎯S102

ADD WEIGHT TO SCORE OF
PROGRAM HAVING "KW" ⎯S103

MAINTAIN MAXIMUM
PROGRAM SCORE IN "Smax" ⎯S104

DIVIDE SCORE OF
EACH PROGRAM BY "Smax" ⎯S105

END

FIG. 10

**Europäisches Patentamt**
**European Patent Office**
**Office européen des brevets**

## EUROPEAN SEARCH REPORT

Application Number

EP 08 01 4235

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/242191 A1 (KUTSUMI HIROSHI [JP] ET AL) 26 October 2006 (2006-10-26) * paragraphs [0144] - [0159], [0061] - [0070], [0082] * | 1-11 | INV. H04N7/173 H04N5/445 |
| X | US 5 867 799 A (LANG ANDREW K [US] ET AL) 2 February 1999 (1999-02-02) | 1,11 | |
| A | * column 10, line 6 - column 11, line 7 * | 2-10 | |
| X | TRISTAN FERNE: "genome - A personalised programme guide" BBC RESEARCH&DEVELOPMENT WHITE PAPER WHP 098, 1 November 2004 (2004-11-01), XP002498053 | 1,11 | |
| A | * page 3, paragraph 4 - page 4 * | 2-10 | |
| X | TRAVIS BAUER AND DAVID LEAKE: "Using Document Acces Sequences to Recommend Customized Information" 1 November 2002 (2002-11-01), INDIANA UNIVERSITY , INDIANA , XP002498054 | 1,11 | TECHNICAL FIELDS SEARCHED (IPC) |
| A | * page 27 - page 33 * | 2-10 | H04N G06F |
| A | EP 1 684 507 A (MATSUSHITA ELECTRIC IND CO LTD [JP]) 26 July 2006 (2006-07-26) * the whole document * | 1-11 | |
| A | US 6 981 040 B1 (KONIG YOCHAI [US] ET AL) 27 December 2005 (2005-12-27) * the whole document * | 1,11 | |

The present search report has been drawn up for all claims

| Place of search | Date of completion of the search | Examiner |
|---|---|---|
| Berlin | 1 October 2008 | Greve, Mario |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 01 4235

This annex lists the patent family members relating to the patent documents cited in the above-mentioned European search report.
The members are as contained in the European Patent Office EDP file on
The European Patent Office is in no way liable for these particulars which are merely given for the purpose of information.

01-10-2008

| Patent document cited in search report | | | Publication date | Patent family member(s) | | | Publication date |
|---|---|---|---|---|---|---|---|
| US 2006242191 | A1 | | 26-10-2006 | CN | 1922605 | A | 28-02-2007 |
| | | | | WO | 2005066837 | A1 | 21-07-2005 |
| | | | | JP | 3978221 | B2 | 19-09-2007 |
| | | | | US | 2006271527 | A1 | 30-11-2006 |
| US 5867799 | A | | 02-02-1999 | US | 5983214 | A | 09-11-1999 |
| | | | | US | 6308175 | B1 | 23-10-2001 |
| | | | | US | 6029161 | A | 22-02-2000 |
| | | | | US | 6314420 | B1 | 06-11-2001 |
| EP 1684507 | A | | 26-07-2006 | CN | 1902911 | A | 24-01-2007 |
| | | | | WO | 2005048587 | A1 | 26-05-2005 |
| | | | | KR | 20060117959 | A | 17-11-2006 |
| US 6981040 | B1 | | 27-12-2005 | US | 2006136589 | A1 | 22-06-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007209729 A